# EUROPEAN PATENT APPLICATION

(11) **EP 4 664 203 A1**
(43) Date of publication of application: **17.12.2025**
(21) Application number: 25181084.2
(22) Date of filing: 05.06.2025
(51) Int. Cl.: G03G 15/00, G06F 3/12, G06Q 10/087

(54) **PERIODIC DELIVERY MANAGEMENT APPARATUS, PERIODIC DELIVERY MANAGEMENT METHOD, AND COMPUTER PROGRAM**

(30) Priority: 10.06.2024 JP 2024093462
(71) Applicant: KONICA MINOLTA, INC., Tokyo 100-7015 (JP)
(72) Inventor: TOYOFUKU, Katsuya, Tokyo, 100-7015 (JP)
(74) Representative: MFG Patentanwälte Meyer-Wildhagen Meggle-Freund Gerhard PartG mbB

(57) **Abstract**

A periodic delivery management apparatus (1) for managing periodic delivery of consumables (6) used in an image forming apparatus (2a,2b,2c), comprises: a determining unit (12) configured to determine whether or not a periodic delivery reference date of consumables (6) for the image forming apparatus (2a, 2b, 2c) has come; an acquiring unit (13) configured to acquire a used amount of consumables (6) in the image forming apparatus (2a, 2b, 2c); and a deciding unit (14) configured to determine a delivery amount of consumables (6) by periodic delivery based on the used amount and output a periodic delivery instruction (D2) designating the delivery amount when it is determined that the periodic delivery reference date has come.

## Description

### CROSS REFERENCE TO RELATED APPLICATIONS

This application is based on Japanese Patent Application No. 2024 - 093462 filed on Jun. 10, 2024, the contents of which are incorporated herein by reference.

### BACKGROUND OF THE INVENTION

### Technical Field

The present invention relates to a periodic delivery management apparatus, a periodic delivery management method, and a computer program, and more particularly, to a technique for managing periodic delivery of consumables used in an image forming apparatus.

### Description of Related Art

Image forming apparatuses such as MFPs (Multifunction Peripherals) and printers are equipped with various consumables. When the life of these consumables expires, the image forming apparatus becomes unable to execute print jobs. Therefore, a downtime occurs in the image forming apparatus unless the consumable whose life has expired is replaced with a new one. In order to suppress downtime of the image forming apparatus, new consumables are generally stocked in the vicinity of the installation location of the image forming apparatus. However, as long as the stock of consumables is not maintained at an appropriate amount, downtime may occur in the image forming apparatus.

Conventionally, a system has been proposed in which an order for a component is placed based on a use history of a consumable (Japanese Unexamined Patent Publication No. JP2008-90710A). This conventional system predicts a future scheduled replacement date on the basis of a use history of the consumable product, and places an order such that the number of items in stock reaches a predetermined number when it is predicted that the number of items in stock will become equal to or less than a predetermined threshold value within a delivery period from the order placement to the delivery.

The conventional system predicts a change in the number of items in stock on the basis of the predicted scheduled replacement date and places an order for a consumable at a timing when it is predicted that the number of items in stock will become equal to or less than a predetermined threshold. For this reason, in the conventional system, the delivery of consumables is irregular, and the number of deliveries tends to increase. In a case where the consumable goods are delivered irregularly, a work of receiving the package occurs at a timing unexpected by the user. Therefore, the user needs to arrange a person for the work of receiving an unexpected package, which causes a problem of interfering with business operation in a busy season or the like. Particularly, in a printing shop which performs production printing or commercial printing, since a large amount of printing is performed, the occurrence of irregular or frequent reception work interferes with other work. In addition, as the number of times of delivery increases, a problem arises in that a delivery burden increases.

### SUMMARY OF THE INVENTION

The present invention has been devised in order to solve the above-described conventional problems. That is, an object of the present invention is to provide a periodic delivery management apparatus, a periodic delivery management method, and a computer program that reduce a burden required for parcel receiving work.

To achieve the above-described object, first, the present invention is directed to a periodic delivery management apparatus (1) for managing periodic delivery of consumables (6) used in an image forming apparatus (2a,2b,2c).

According to one aspect of the present invention, the periodic delivery management apparatus (1) comprises: a determining unit (12) configured to determine whether or not a periodic delivery reference date of consumables (6) for the image forming apparatus (2a, 2b, 2c) has come; an acquiring unit (13) configured to acquire a used amount of consumables (6) in the image forming apparatus (2a, 2b, 2c); and a deciding unit (14) configured to determine a delivery amount of consumables (6) by periodic delivery based on the used amount and output a periodic delivery instruction (D2) designating the delivery amount when it is determined that the periodic delivery reference date has come.

Second, the present invention is directed to a periodic delivery management method for managing periodic delivery of consumables (6) used in an image forming apparatus (2a,2b,2c).

According to one aspect of the present invention, the periodic delivery management method comprises: a determining step for determining whether or not a periodic delivery reference date of consumables (6) for the image forming apparatus (2a, 2b, 2c) has come; an acquiring step for acquiring a used amount of the consumable (6) in the image forming apparatus (2a2b,2c); and a deciding step for determining a delivery amount of consumables (6) by periodic delivery based on the used amount and output a periodic delivery instruction (D2) designating the delivery amount when it is determined that the periodic delivery reference date has come.

Third, the present invention is directed to a computer program (21) to be executed by a computer (1) for managing periodic delivery of consumables (6) to be used in an image forming apparatus (2a,2b,2c).

According to one aspect of the present invention, the computer program (21) causes the computer (1) to execute: a determining step for determining whether or not a periodic delivery reference date of consumables (6) for the image forming apparatus (2a, 2b, 2c) has come; an acquiring step for acquiring a used amount of the consumable (6) in the image forming apparatus (2a2b,2c); and a deciding step for determining a delivery amount of consumables (6) by periodic delivery based on the used amount and output a periodic delivery instruction (D2) designating the delivery amount when it is determined that the periodic delivery reference date has come.

### BRIEF DESCRIPTION OF THE DRAWINGS

The advantages and features provided by one or more embodiments of the invention will become more fully understood from the detailed description given herein below and the appended drawings which are given by way of illustration only, and thus are not intended as a definition of the limits of the present invention.
Fig. 1 is a diagram illustrating a conceptual configuration example of a periodic delivery system;
Fig. 2 is a block diagram illustrating a hardware configuration and a functional configuration of a periodic delivery management apparatus;
Fig. 3 is a diagram illustrating an example of delivery management information;
Fig. 4 is a diagram illustrating an example of a setting screen provided by a setting unit;
Fig. 5 is a diagram illustrating an example of a setting screen provided by the setting unit;
Fig. 6 is a diagram illustrating an example of inventory information;
Fig. 7 is a diagram illustrating a delivery procedure of consumables by the periodic delivery system;
Fig. 8 is a diagram illustrating a first example of a change in the number of times of replacement and the number of inventories of consumables;
Fig. 9 is a diagram illustrating a second example of a change in the number of times of replacement and the number of inventories of consumables;
Fig. 10 is a diagram illustrating a third example related to changes in the number of times of replacement and the number of inventories of consumables;
Fig. 11 is a flowchart illustrating a processing procedure performed in the periodic delivery management apparatus; and
Fig. 12 is an illustration of a modification example of the periodic delivery management apparatus.

### DETAILED DESCRIPTION OF EMBODIMENTS

Hereinafter, one or more embodiments of the present invention will be described with reference to the drawings. However, the scope of the invention is not limited to the disclosed embodiments.

Hereinafter, preferred embodiments of the present invention will be described in detail with reference to the drawings. Note that elements common to the embodiments described below are denoted by the same reference signs, and redundant description thereof is omitted.

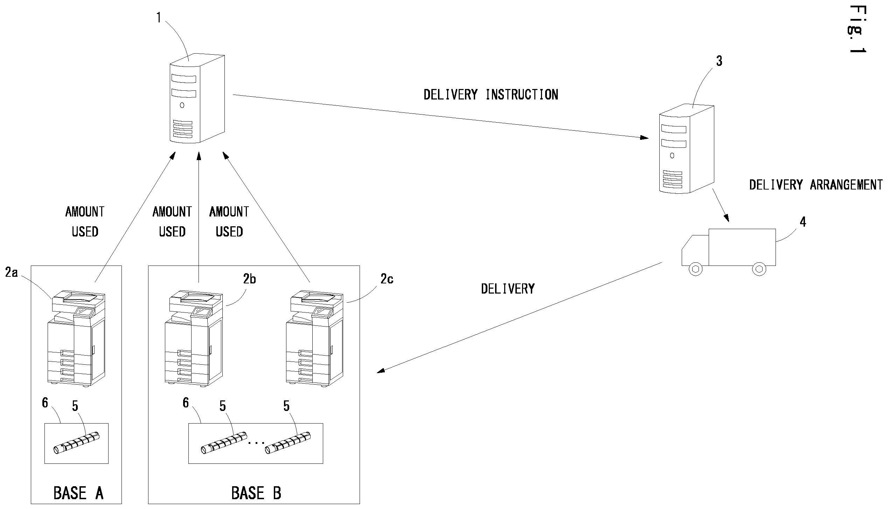

Fig. 1 is a diagram illustrating an example of a conceptual configuration of a periodic delivery system that is an embodiment of the present invention. The periodic delivery system has, as its basic functions, functions of periodically delivering consumables 6 such as toner bottles 5 to the respective bases A and B where the image forming apparatuses 2a, 2b, and 2c are installed, to thereby appropriately maintain the inventory quantities of consumables 6 at the respective bases A and B. The periodic delivery system includes a periodic delivery management apparatus 1, a plurality of image forming apparatuses 2a, 2b, and 2c installed at a plurality of bases A and B, respectively, and a delivery arrangement apparatus 3.

The image forming apparatuses 2a, 2b, and 2c are configured as, for example, MFPs, and have a plurality of functions such as copying, scanning, and printing. For example, the image forming apparatus 2a is installed at a base A. Further, for example, the image forming apparatuses 2b and 2c are installed at a base B. Although two bases A and B are illustrated in Fig. 1, the number of bases connected to the periodic delivery system is not limited to two.

Each of the image forming apparatuses 2a, 2b, and 2c transfers a toner image onto a sheet, such as a printing sheet, by, for example, an electrophotographic method, and fixes and outputs the toner image onto the sheet. Toner bottles 5 can be attached to and detached from image forming apparatuses 2a, 2b, and 2c for forming an image by an electrophotographic method. In the case of a color machine, the image forming apparatuses 2a, 2b, and 2c can have attached thereto and detached therefrom a plurality of toner bottles 5 corresponding to respective colors such as yellow (Y), magenta (M), cyan (C), and black (K). The toner bottles 5 are consumables 6 in the image forming apparatuses 2a, 2b, and 2c. In addition to the toner bottles 5, various consumables 6 are attached to the image forming apparatuses 2a, 2b, and 2c. For example, consumables 6 attached to the image forming apparatuses 2a, 2b, and 2c include waste toner containers, developing devices, charging electrode units, photosensitive drums, transfer belts, and the like in addition to the toner bottles 5.

In addition, the image forming apparatuses 2a, 2b, and 2c may form an image by an inkjet method. In this case, the consumables 6 attached to the image forming apparatuses 2a, 2b, and 2c include an ink tank, an ink head, and the like.

At the bases A and B, new ones of the consumables 6 to be attached to the image forming apparatuses 2a, 2b, and 2c are stocked as inventory. Therefore, when the life of consumables 6 attached to the image forming apparatuses 2a, 2b, and 2c expires, the user can immediately replace the consumables 6 of the image forming apparatuses 2a, 2b, and 2c with a new one. Thus, the downtime of the image forming apparatuses 2a, 2b, and 2c is reduced.

The periodic delivery management apparatus 1 is constituted by, for example, a personal computer (PC) or a server computer. The periodic delivery management apparatus 1 is installed on a cloud such as the Internet, for example. The periodic delivery management apparatus 1 is communicable with the image forming apparatuses 2a, 2b, and 2c installed at the respective bases A and B via a network such as the Internet. The periodic delivery management apparatus 1 can also communicate with other devices installed in each of the bases, A and B. Furthermore, the periodic delivery management apparatus 1 can communicate with the delivery arrangement apparatus 3 via a network.

A periodic delivery management apparatus 1 manages the periodic delivery of consumables 6 to respective bases A and B. The periodic delivery management apparatus 1 determines the amount of consumables 6 to be delivered when performing periodic delivery of consumables 6 to each of the bases A and B. The delivery amount is determined based on the amount of consumables 6 used by the image forming apparatuses 2a, 2b, and 2c. That is, the periodic delivery management apparatus 1 acquires the used amount of consumables 6 by each of the image forming apparatuses 2a, 2b, and 2c from each of the bases A and B, and determines, based on the acquired used amount, the delivery amount at the time of periodic delivery to each of the bases A and B. Upon determining the delivery amount, the periodic delivery management apparatus 1 outputs a periodic delivery instruction including the delivery amount to the delivery arrangement apparatus 3.

Furthermore, the periodic delivery management apparatus 1 can manage the number of consumables 6 in stock at each of the bases A and B at times other than the time of periodic delivery. Therefore, when detecting that the stock quantity of consumables 6 at each of the bases A and B becomes a predetermined lower limit value or less at a timing other than the time of the periodic delivery, the periodic delivery management apparatus 1 outputs an urgent delivery arrangement to the delivery arrangement apparatus 3.

The delivery arrangement apparatus 3 is constituted by, for example, a personal computer (PC) or a server computer. The delivery arrangement apparatus 3 is installed in, for example, a delivery center for delivering the consumables 6, and arranges delivery by designating a delivery destination and a delivery amount of consumables 6. When delivery is arranged by the delivery arrangement apparatus 3, operator loads consumables 6 on a transport vehicle 4 or the like and delivers it to the designated bases A and B. When the periodic delivery management apparatus 1 is installed in a delivery center or the like, the periodic delivery management apparatus 1 may also have the function of the delivery arrangement apparatus 3.

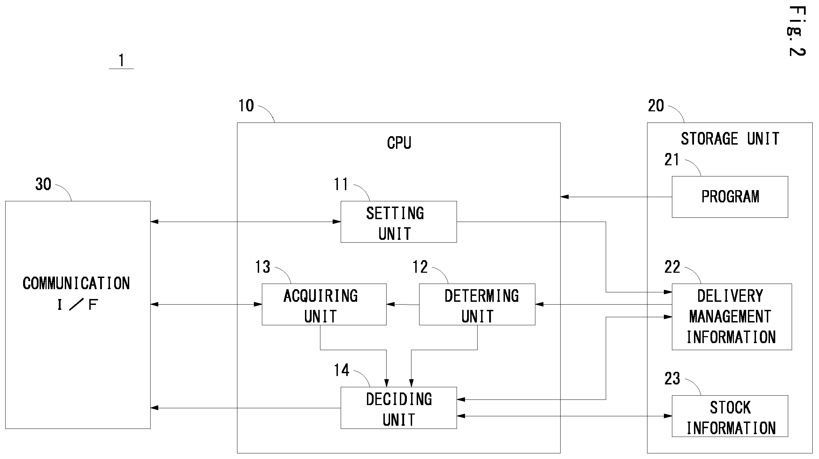

Fig. 2 is a block diagram illustrating the hardware configuration and the functional configuration of the periodic delivery management apparatus 1. The periodic delivery management apparatus 1 includes a CPU 10, a storage unit 20, and a communication interface 30 as its hardware configuration. The CPU 10 is a hardware processor. The CPU 10 reads and executes a computer-readable program stored in a storage unit 20. The storage unit 20 is a nonvolatile storage device formed with, for example, a hard disk drive (HDD) or a solid state drive (SSD). The communication interface 30 is an interface that connects the periodic delivery management apparatus 1 to a network and communicates with an external device via the network.

The storage unit 20 stores a program 21 to be executed by the CPU 10. The storage unit 20 stores delivery management information 22 and stock information 23. The CPU 10 functions as a setting unit 11, a determining unit 12, an acquiring unit 13, and a deciding unit 14 by executing the program 21. The setting unit 11 corresponds to a setting processor. The determining unit 12 corresponds to a determining processor. The deciding unit 14 corresponds to a deciding processor.

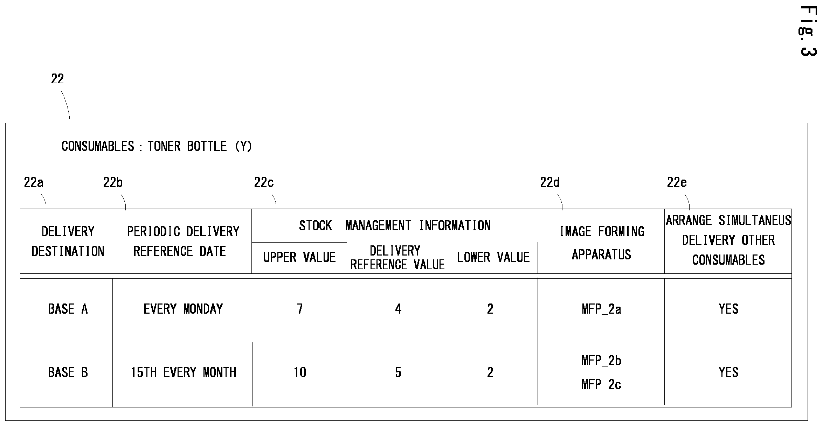

The setting unit 11 registers, in the delivery management information 22, information set in advance for performing periodic delivery of consumables 6 to each of the bases A and B. Fig. 3 is a view illustrating an example of delivery management information 22. Fig. 3 illustrates information on the toner bottles 5 of the color Y among consumables 6 attached to the image forming apparatuses 2a, 2b, and 2c. The delivery management information 22 includes a plurality of setting items such as a delivery destination 22a, a periodic delivery reference date 22b, stock management information 22c, an image forming apparatus 22d, and a simultaneous delivery arrangement 22e of other consumables. The setting unit 11 sets information necessary for the periodic delivery for each of the plurality of setting items.

The delivery destination 22a is information for designating a delivery destination of consumables 6. In the example of Fig. 3, a base A and a base B are registered as the delivery destinations of consumables 6.

The periodic delivery reference date 22b is information for designating a periodic delivery reference date. The periodic delivery reference date is a date set in advance for starting the periodic delivery process. For example, the shipping date of consumables for periodic delivery may be set as the periodic delivery reference date, or a date that is several days before the shipping date may be set as the periodic delivery reference date. The periodic shipping reference date is set for each of the bases A and B as the delivery destination. In the example of Fig. 3, Monday of every week is set as the periodic delivery reference date of the base A, and 15th of every month is set as the periodic delivery reference date of the base B.

The stock management information 22c is information to be referred to in determining the amount of consumables 6 to be delivered in periodic delivery to each of the bases A and B. In the stock management information 22c, an upper limit value, a delivery reference value, and a lower limit value of the stock quantity of consumables 6 in each of the bases A and B are set in advance. The upper limit value of the stock quantity is a value indicating the maximum number of consumables 6 that can be accommodated in the storage space secured in each of the bases A and B. The delivery reference value of the stock quantity is set as a value smaller than the upper limit value, and is a value for determining whether or not to deliver consumables 6 at the time of periodic delivery. The lower limit value of the stock quantity is a minimum value of the stock quantity set in advance in order to prevent consumables 6 from being out of stock at each of the bases A and B within the periodic delivery period. The lower limit value of the stock quantity may be the same value as the delivery reference value, or may be a value smaller than the delivery reference value. In the example of Fig. 3, as the stock management information 22c at the base A, the upper limit value "7", the delivery reference value "4", and the lower limit value "2" are set, and as the stock management information 22c at the base B, the upper limit value "10", the delivery reference value "5", and the lower limit value "2" are set.

The image forming apparatus 22d is identification information of the image forming apparatuses 2a, 2b, and 2c installed at the respective bases A and B. For example, when consumables 6 are replaced in the image forming apparatuses 2a, 2b, and 2c, the image forming apparatuses 2a, 2b, and 2c transmit replacement information indicating that the consumables 6 have been replaced to the periodic delivery management apparatus 1. The replacement information includes the identifying information of the image forming apparatuses 2a, 2b, and 2c and information by which the replaced consumables 6 can be identified. By registering the identification information of the image forming apparatuses 2a, 2b, and 2c in the delivery management information 22 in advance, the periodic delivery management apparatus 1 can specify the transmission source of the replacement information.

The simultaneous delivery arrangement 22e of the other consumables is information in which whether or not to simultaneously deliver other consumables 6 is set in advance in a case where it is determined to deliver consumables 6 to each of the bases A and B. When "YES" is set in the item of the simultaneous delivery arrangement 22e, other consumables 6 is simultaneously delivered. When the item of the simultaneous delivery arrangement 22e is "NO", the simultaneous delivery of another consumables 6 is not performed.

When registering the delivery management information 22 as described above, the setting unit 11 provides a setting screen to an external device via the communication interface 30 and acquires operation information for the setting screen from the external device. Then, the setting unit 11 registers the information designated in the operation information acquired from the external device in the delivery management information 22. The external devices are, for example, the image forming apparatuses 2a, 2b, and 2c at the respective bases A and B. Upon receiving the setting screen from the periodic delivery management apparatus 1, each of the image forming apparatuses 2a, 2b, and 2c displays the setting screen on the display part of the operation panel, and accepts an operation by the user. Then, the image forming apparatuses 2a, 2b, and 2c generate operation information based on the user's operation and transmit the operation information to the periodic delivery management apparatus 1.

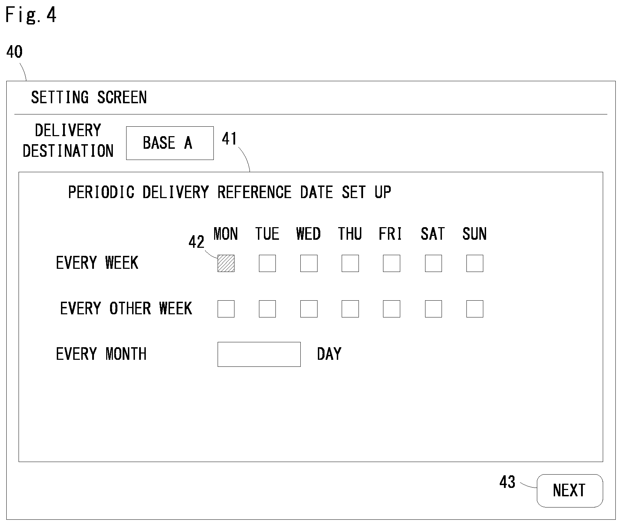

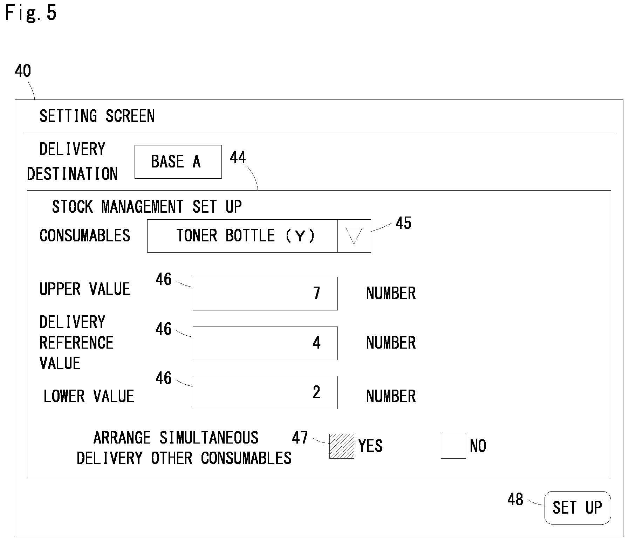

Figs. 4 and 5 are diagrams illustrating an example of a setting screen 40 provided to the outside by the setting unit 11. A setting screen 40 in Fig. 4 exemplifies a screen provided to the image forming apparatus 2a at the base A. The setting screen 40 includes a first setting screen 41 for setting the periodic delivery reference date. On the first setting screen 41, it is possible to set a day of the week or a date on which the processing of the periodic delivery is started as the periodic delivery reference date. Fig. 4 shows an example in which the button 42 for instructing to perform the periodic delivery every Monday is operated. When the user sets the periodic delivery reference date on the first setting screen 41, the user operates the button 43. When the button 43 is operated, the setting screen 40 changes from the screen in Fig. 4 to the screen in Fig. 5.

The setting screen 40 of Fig. 5 includes a second setting screen 44 for setting the stock management information and the simultaneous delivery arrangement of other consumables 6. The second setting screen 44 includes a pull-down menu 45 for selecting consumables 6, a setting field 46 for setting an upper limit value, a delivery reference value, and a lower limit value of the number of items in stock for the selected consumables 6, and a button 47 for setting simultaneous delivery arrangement for another consumables 6. Further, the setting screen 40 of Fig. 5 displays a setting button 48 below the second setting screen 44. When the user operates the setting button 48 in a state where a desired setting is performed on the second setting screen 44, the setting contents for the first setting screen 41 and the second setting screen 44 are registered in the delivery management information 22.

The setting unit 11 may display the setting screen 40 illustrated in Figs. 4 and 5 on an information processor such as a personal computer installed in each of the bases A and B, instead of the image forming apparatuses 2a, 2b, and 2c. Furthermore, the setting unit 11 may display it on the portable terminal carried by the user at each of the bases A and B.

The information related to the bases A and B is registered in the delivery management information 22 by the setting unit 11, so that the periodic delivery management apparatus 1 can manage the periodic delivery to the bases A and B. Accordingly, the determining unit 12, the acquiring unit 13, and the deciding unit 14 function in the CPU 10.

The determining unit 12 determines whether or not it is the periodic delivery reference date of consumables 6 to the image forming apparatuses 2a, 2b, and 2c of the respective bases A and B. The determining unit 12 acquires the current date and time output from the periodic delivery management apparatus 1 and determines whether the current date and time match a periodic delivery reference date registered in the delivery management information 22. The determining unit 12 also determines, for each of the bases A and B, whether it is a periodic delivery reference date. When determining that it is the periodic delivery reference date, the determining unit 12 notifies the deciding unit 14 of the periodic delivery reference date. Furthermore, the determining unit 12 may also notify the acquiring unit 13 of the periodic delivery reference date. These notifications include information capable of specifying the base that has reached the periodic delivery reference date.

The acquiring unit 13 acquires information on the usage amount of consumables 6 in each of the image forming apparatuses 2a, 2b, and 2c installed in the respective bases A and B. For example, the acquiring unit 13 acquires replacement information transmitted from the image forming apparatuses 2a, 2b, and 2c along with the replacement of consumables 6 in the image forming apparatuses 2a, 2b, and 2c, as the information on the amount of consumables 6 used. Furthermore, when users at the bases A and B replace consumables 6 in the image forming apparatuses 2a, 2b, and 2c, the users may use their own information processors or mobile terminals to transmit replacement information to the periodic delivery management apparatus 1. In this case, the acquiring unit 13 acquires the information on the usage amount of consumables 6 from the information processing apparatus or the portable terminal at each of the bases A and B. When acquiring the information on the usage amount, the acquiring unit 13 outputs the information to the deciding unit 14.

Further, in a case where the acquiring unit 13 is notified by the determining unit 12 that it is the periodic delivery reference date of a certain base, the acquiring unit 13 may access the image forming apparatuses 2a, 2b, and 2c installed at the base and acquire the information on the usage amount of consumables 6. At this time, the information on the usage amount acquired by the acquiring unit 13 is information indicating the remaining usable amount of consumables 6 attached to the image forming apparatuses 2a, 2b, and 2c. For example, in the case of the toner bottles 5, the acquiring unit 13 acquires information on the remaining amount of toner of the toner bottles 5 attached to each of the image forming apparatuses 2a, 2b, and 2c. When acquiring the information indicating the remaining usable amount of consumables 6 on the periodic delivery reference date, the acquiring unit 13 outputs the information to the deciding unit 14.

The deciding unit 14 determines the delivery amount of consumables 6 based on the information on the used amount acquired by the acquiring unit 13, and outputs a delivery instruction in which the delivery amount is specified to the delivery arrangement apparatus 3. The deciding unit 14 records and manages the number of stocks of consumables 6 at each of the bases A and B in the stock information 23. That is, when the information on the use amount of consumables 6 is acquired by the acquiring unit 13, the deciding unit 14 sequentially updates the stock information 23 based on the information.

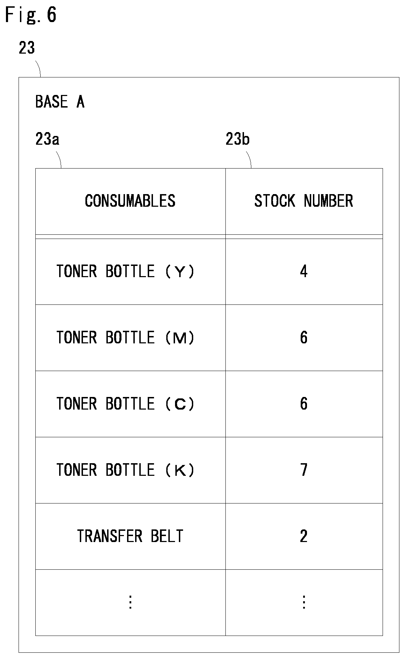

Fig. 6 is a view illustrating an example of the stock information 23. Fig. 6 illustrates the stock information 23 related to the base A. The stock information 23 is information in which consumables 23a stocked in the base A and its stock quantity 23b are associated with each other. In the example of Fig. 6, the number of stocks of the toner bottles 5 of Y color is "4" at the base A. The number of stocks is also registered for the other consumables 6. The same stock information 23 is stored in the storage unit 20 for the base B.

When consumables 6 are replaced in the image forming apparatuses 2a, 2b, and 2c, the acquiring unit 13 acquires the replacement information. The deciding unit 14 updates the stock information 23 based on the replacement information. Therefore, the stock information 23 managed by the deciding unit 14 is information in which the inventory status of consumables 6 in each of the bases A and B is reflected in real time.

When receiving the notification indicating the periodic delivery reference date from the determining unit 12, the deciding unit 14 reads the delivery management information 22 and the stock information 23. Then, the deciding unit 14 compares the stock management information 22c of the base of the periodic delivery reference date with the stock information 23, and determines whether or not to perform the periodic delivery. When the deciding unit 14 decides to perform the periodic delivery, the deciding unit 14 decides the delivery amount by the periodic delivery with reference to the stock management information 22c and the stock information 23.

For example, when the stock quantity indicated by the stock information 23 exceeds the delivery reference value, the deciding unit 14 determines not to perform the current periodic delivery. As described above, the delivery reference value is a value set in advance for determining whether or not to deliver the consumables 6 at the time of periodic delivery. In a case where the stock quantity exceeds the delivery reference value, the deciding unit 14 determines that consumables 6 is sufficiently in stock at the base that becomes the periodic delivery reference date, and does not perform the current periodic delivery. Accordingly, the work of receiving the package does not occur at the base that is the target of the periodic delivery. Therefore, the work burden on the user is reduced.

In a case where the deciding unit 14 decides not to perform the periodic delivery this time, the deciding unit 14 preferably notifies the user at the base that the periodic delivery this time is not performed. This notification is performed by, for example, e-mail. With such a notification, the user can know that there is no periodic delivery this time, and thus does not need to prepare for receiving the package. Further, when the deciding unit 14 decides not to perform the periodic delivery this time, the deciding unit 14 may notify the delivery arrangement apparatus 3 that the periodic delivery this time is not performed.

When the stock quantity indicated by the stock information 23 is equal to or less than the delivery reference value, the deciding unit 14 determines to perform the current periodic delivery. That is, when the stock quantity is equal to or less than the delivery reference value, the deciding unit 14 determines that the stock of consumables 6 is insufficient at the base that becomes the periodic delivery reference date, and determines to perform the current periodic delivery.

When it is determined to perform the periodic delivery this time, the deciding unit 14 determines the delivery amount so that the stock quantity of the base becomes the upper limit value determined in the stock management information 22c. For example, when the stock quantity of the toner bottles 5 of Y color at the base A is "2", referring to the delivery management information 22 of Fig. 3, the upper limit value is "7", and therefore, the deciding unit 14 determines "5" as the delivery amount. When determining the delivery amount by the periodic delivery, the deciding unit 14 outputs a periodic delivery instruction specifying the delivery amount to the delivery arrangement apparatus 3. The delivery arrangement apparatus 3 arranges consumables 6 according to the delivery amount designated by the deciding unit 14, and delivers consumables 6 to the base where the periodic delivery reference date is reached.

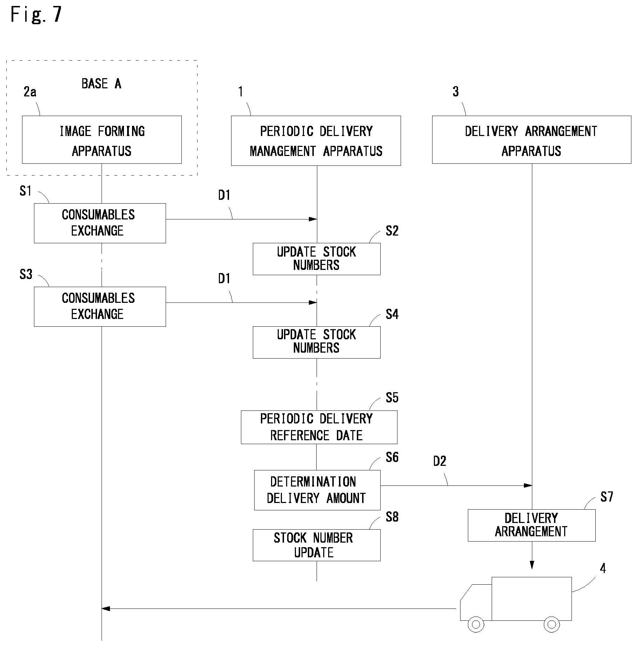

Fig. 7 is a diagram illustrating a delivery procedure of consumables 6 by the periodic delivery system. Note that Fig. 7 illustrates a case where consumables 6 is replaced in the image forming apparatus 2a at the base A. Fig. 7 illustrates an example of a case where the stock quantity at the base A is equal to or smaller than the delivery reference value when the periodic delivery reference date at the base A comes. When consumables 6 of the image forming apparatus 2a is replaced at the base A, the image forming apparatus 2a transmits replacement information D1 to the periodic delivery management apparatus 1 (step S1). Upon receiving the replacement information D1 from the image forming apparatus 2a at the base A, the periodic delivery management apparatus 1 updates the inventory quantity at the base A in the stock information 23 (step S2). Thereafter, when consumables 6 of the image forming apparatus 2a is replaced again at the base A, the image forming apparatus 2a transmits replacement information D1 to the periodic delivery management apparatus 1 (step S3). The periodic delivery management apparatus 1 updates the inventory quantity at the base A in the stock information 23 again based on the replacement information D1 (step S4). As described above, the periodic delivery management apparatus 1 updates the stock information 23 every time consumables 6 stocked as inventory in each of the bases A and B is used. Therefore, the periodic delivery management apparatus 1 can grasp the stock status of consumables 6 at each of the bases A and B in real time.

When detecting the periodic delivery reference date to the base A (step S5), the periodic delivery management apparatus 1 determines the delivery amount to the base A based on the stock quantity of consumables 6 at the base A (step S6). The periodic delivery management apparatus 1 then transmits a periodic delivery instruction D2 in which the delivery amount is specified to the delivery arrangement apparatus 3. The delivery arrangement apparatus 3 makes a delivery arrangement for consumables 6 on the basis of the periodic delivery instruction D2, and delivers consumables 6 to the base A by using transportation means such as the transport vehicle 4 (step S7). In addition, the periodic delivery management apparatus 1 updates the stock quantity at the base A of the stock information 23 in accordance with the transmission of the periodic delivery instruction D2 to the delivery arrangement apparatus 3 (step S8). That is, the periodic delivery management apparatus 1 updates the stock quantity at the base A to the upper limit value.

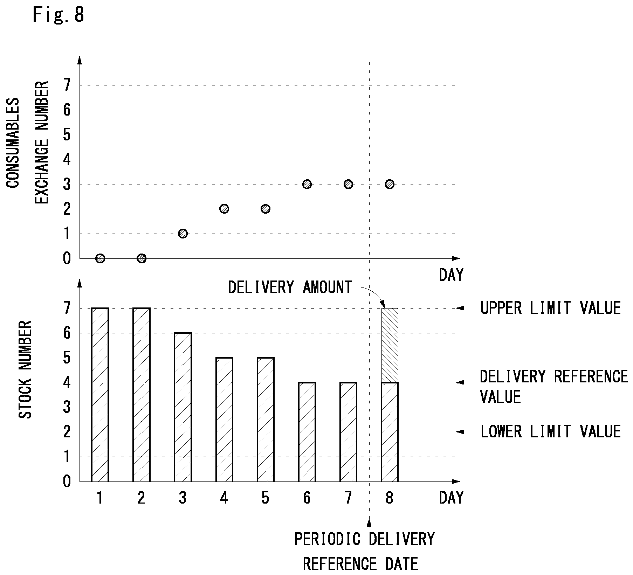

Fig. 8 is a diagram showing a first example of changes in the number of replacements and the number of stocks of consumables 6 at the base A. In the example illustrated in Fig. 8, the stock quantity is the upper limit value "7" on the first day that is the periodic delivery reference date. On the first and second days, the consumables 6 is not replaced. Therefore, the stock quantity of consumables 6 managed by the periodic delivery management apparatus 1 is also held at the upper limit value. Thereafter, on the third day and the fourth day, consumables 6 are replaced once each. Therefore, the stock quantity managed by the periodic delivery management apparatus 1 decreases by one on the third day and the fourth day. On the fifth day, consumables 6 is not replaced, and on the sixth day, consumables 6 is replaced. Therefore, the stock quantity managed by the periodic delivery management apparatus 1 is further decreased by one on the sixth day, and becomes the same value as the delivery reference value. Thereafter, when it becomes the periodic delivery reference date of the eighth day, the periodic delivery management apparatus 1 determines that the stock quantity at the base A is equal to or less than the delivery reference value. Therefore, the periodic delivery management apparatus 1 determines the delivery amount "3" such that the stock quantity at the base A becomes the upper limit value, and outputs a periodic delivery instruction to the delivery arrangement apparatus 3. Accordingly, the periodic delivery management apparatus 1 updates the stock quantity at the base A to the upper limit value.

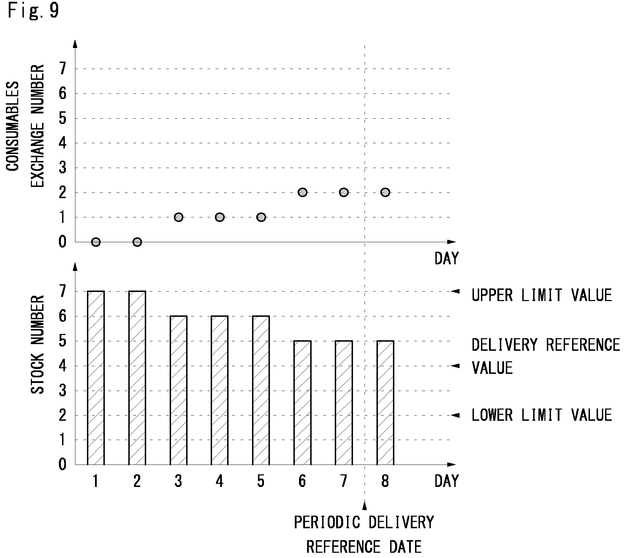

Fig. 9 is a diagram showing a second example of a change in the number of replacements and the number of stocks of consumables 6 at the base A. Fig. 9 illustrates an example in which it is determined not to perform the periodic delivery when the periodic delivery reference date comes. In the example illustrated in Fig. 9, consumables 6 is replaced once on each of the third day and the sixth day. In this case, when it becomes the periodic delivery reference date of the eighth day, the stock quantity at the base A is "5" and exceeds the delivery reference value. In this case, the periodic delivery management apparatus 1 determines not to perform the current periodic delivery to the base A. The periodic delivery management apparatus 1 does not output a periodic delivery instruction to the delivery arrangement apparatus 3. Thus, the work of receiving the package does not occur at the base A, and the work burden on the user can be reduced.

Incidentally, in a case where the current periodic delivery is to be skipped, it is preferable that the number of consumables 6 in stock at the base targeted for the periodic delivery is sufficient. Specifically, it is preferable that the same number or more of the consumables 6 as those used during a period from the previous periodic delivery reference date to the current periodic delivery reference date are in stock at the base. Therefore, when the current periodic delivery is skipped, the delivery reference value is preferably set as a value that is 1/2 or more of the upper limit value. For example, the deciding unit 14 may determine whether to skip the current periodic delivery on condition that the delivery reference value is set as a value equal to or more than 1/2 of the upper limit value.

Furthermore, consumption of consumables 6 may rapidly progress in a busy season or the like. In such a case, the stock of consumables 6 may run out before the periodic delivery reference date by only the periodic delivery. On the other hand, the periodic delivery management apparatus 1 of the present embodiment grasps the number of consumables 6 in stock at each base in real time as described above. Therefore, when the deciding unit 14 detects that the stock quantity of consumables 6 is equal to or less than the lower limit value in a state where the determining unit 12 does not determine that it is the periodic delivery reference date, it is preferable to instruct the delivery arrangement apparatus 3 to perform emergency delivery of consumables 6.

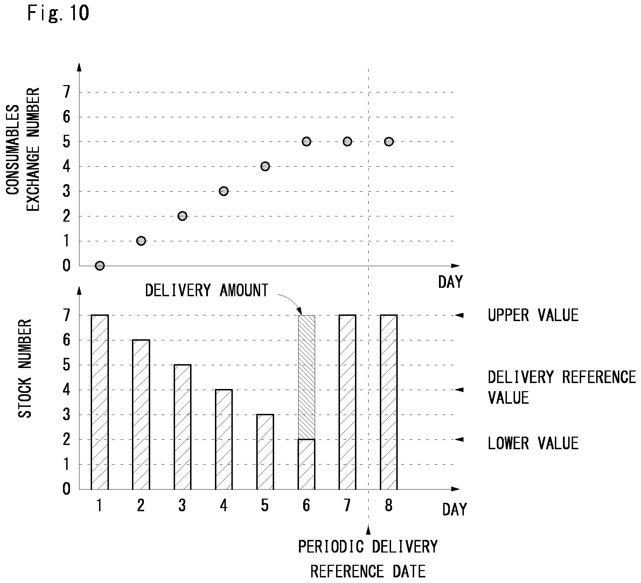

Fig. 10 is a diagram showing a third example of changes in the number of times of replacement and the number of stocks of consumables 6 at the base A. Fig. 10 illustrates an example in which the urgent delivery of consumables 6 is instructed in a state where the periodic delivery reference date is not reached. In the example shown in Fig. 10, consumables 6 is replaced once every day during the period from the first day to the sixth day. Therefore, at the time when the replacement on the sixth day is performed, the stock quantity of consumables 6 at the base A has reached the lower limit value "2". In this case, the periodic delivery management apparatus 1 outputs the emergency delivery instruction to the delivery arrangement apparatus 3 in a state where the periodic delivery reference date has not come. At this time, the deciding unit 14 determines a delivery amount whose upper limit value is the number of stocks at the base A, and outputs an emergency delivery instruction specifying the delivery amount. Thus, consumables 6 is delivered to the base A earlier than the periodic delivery. Therefore, it is possible to prevent stockout of consumables 6 in a busy season or the like.

Furthermore, after outputting the emergency delivery instruction to the delivery arrangement apparatus 3, the deciding unit 14 manages the number of consumables 6 in stock at the base A as the upper limit value. Therefore, if the stock quantity exceeds the delivery reference value when the periodic delivery reference date comes after the output of the emergency delivery instruction, the deciding unit 14 determines not to perform the current periodic delivery.

Further, when the information indicating the remaining usable amount of consumables 6 is acquired by the acquiring unit 13 on the periodic delivery reference date, the deciding unit 14 may adjust the stock quantity of consumables 6 based on the remaining usable amount. For example, in the case of toner bottles 5, when the toner remaining amount is smaller than a predetermined amount, toner bottles 5 are replaced at a relatively early stage. Even when consumables 6 is shipped from a delivery center or the like, it may take about several days from the shipment to the arrival. There is a possibility that consumables 6 is replaced during the delivery period and the stock number at the base further decreases. Therefore, in a case where the remaining usable amount of consumables 6 is less than a predetermined amount, the deciding unit 14 may determine that consumables 6 will be immediately replaced and determine the delivery amount after reducing the stock quantity. By doing so, even when consumables 6 is replaced during the delivery period, the stock quantity of consumables 6 reaches the upper limit value when consumables 6 is delivered to the base.

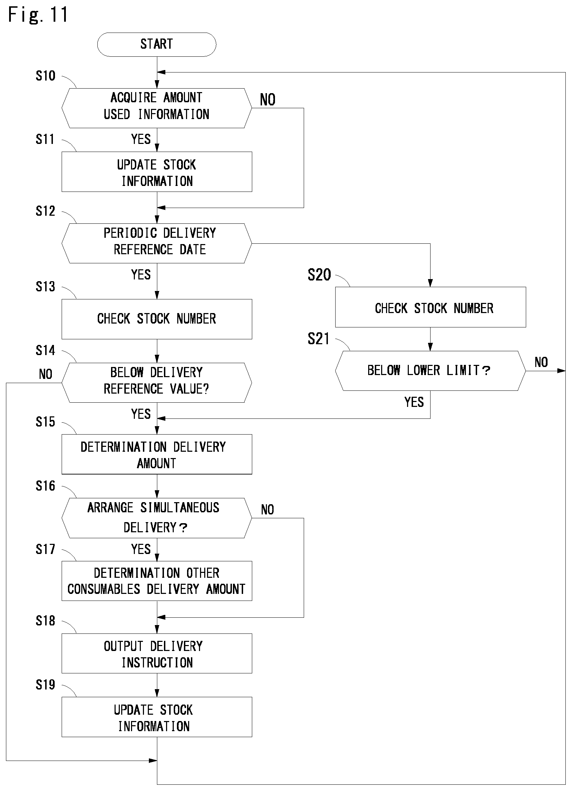

Next, a processing procedure by the periodic delivery management apparatus 1 will be described. Fig. 11 is a flowchart illustrating a processing procedure performed in the periodic delivery management apparatus 1. This processing is performed by the CPU 10 executing the program 21. In addition, this process is performed in a state where information related to the bases A and B is registered in the delivery management information 22.

First, the periodic delivery management apparatus 1 determines whether or not information regarding the amount of use of consumables 6, such as replacement information, has been acquired (step S10). If the information on the used amount is acquired (YES in step S10), the periodic delivery management apparatus 1 updates the stock information 23 (step S11). When the information related to the used amount is not acquired (NO in step S10), the periodic delivery management apparatus 1 does not update the stock information 23.

Next, the periodic delivery management apparatus 1 determines whether the current date and time is the periodic delivery reference date (step S12). If it is the periodic delivery reference date (YES in step S12), the periodic delivery management apparatus 1 refers to the stock information 23 and checks the stock quantity of consumables 6 stocked in the base (step S13). The periodic delivery management apparatus 1 determines whether the stock quantity of consumables 6 is equal to or less than the delivery reference value (step S14). When the stock quantity of consumables 6 exceeds the delivery reference value (NO in step S14), the processing by the periodic delivery management apparatus 1 returns to step S10. In this case, the periodic delivery management apparatus 1 repeatedly executes the processing of step S10 and the subsequent steps.

When the stock number of consumables 6 is equal to or less than the delivery reference value (YES in step S14), the periodic delivery management apparatus 1 determines the delivery amount of consumables 6 based on the stock number of consumables 6 (step S15). That is, the periodic delivery management apparatus 1 determines the delivery amount of consumables 6 such that the stock quantity of consumables 6 reaches the upper limit value.

Next, the periodic delivery management apparatus 1 determines whether simultaneous delivery arrangement for another consumables 6 is set (step S16). If an arrangement for simultaneous delivery of another consumables 6 is to be made (YES in step S16), the periodic delivery management apparatus 1 determines the delivery amount of the other consumables 6 (step S17). At this time, when the current stock quantity of the other consumables 6 is less than the upper limit value, the periodic delivery management apparatus 1 determines the delivery quantity of the other consumables 6 so that the stock quantity becomes the upper limit value. That is, when other consumables 6 are simultaneously delivered, the periodic delivery management apparatus 1 determines the delivery amount such that the stock quantity of other consumables 6 becomes the upper limit value without considering the delivery reference value of other consumables 6. When the number of stocks of the other consumables 6 has already reached the upper limit value, the periodic delivery management apparatus 1 determines not to simultaneously deliver the other consumables 6.

Upon determining the delivery amount of consumables 6, the periodic delivery management apparatus 1 outputs a delivery instruction to the delivery arrangement apparatus 3 (step S18). At this time, the periodic delivery management apparatus 1 designates the delivery amount of consumables 6 to the delivery arrangement apparatus 3. Thereafter, the periodic delivery management apparatus 1 updates the stock information 23 on the basis of the specified delivery amount (step S19).

On the other hand, in a case where the current date and time is not the periodic delivery reference date (NO in step S12), the periodic delivery management apparatus 1 refers to the stock information 23 and checks the stock number of consumables 6 stocked in the base (step S20). The periodic delivery management apparatus 1 determines whether the stock quantity of consumables 6 is equal to or less than the lower limit value (step S21). If the stock number of consumables 6 exceeds the lower limit (NO in step S21), the process by the periodic delivery management apparatus 1 returns to step S10.

On the other hand, when the stock quantity of consumables 6 is equal to or less than the lower limit value (YES in step S21), the processing by the periodic delivery management apparatus 1 proceeds to step S15. The periodic delivery management apparatus 1 then executes processing in steps S15 to S19. Thus, the emergency delivery instruction when it is not the periodic delivery reference date is output from the periodic delivery management apparatus 1 to the delivery arrangement apparatus 3.

As described above, the periodic delivery management apparatus 1 determines, for each of the bases where the image forming apparatuses 2a, 2b, and 2c are installed, whether or not it is a periodic delivery reference date set in advance for periodic delivery of consumables 6. When determining that it is the periodic delivery reference date, the periodic delivery management apparatus 1 determines the delivery amount of consumables 6 by the periodic delivery on the basis of the use amount of consumables 6 at the base, and outputs a periodic delivery instruction designating the determined delivery amount. That is, as its basic function, the periodic delivery management apparatus 1 maintains the number of consumables 6 in stock at each base base at an appropriate amount by periodically delivering consumables 6. Therefore, the periodic delivery management apparatus 1 can prevent consumables 6 from being delivered to each base irregularly. As a result, it is possible to prevent the operation of receiving the package from occurring at an unexpected timing at each base, thereby reducing the work burden on the user.

In addition, since the number of stocks in each base can be suppressed to a necessary minimum, it is not necessary to secure a large space for storing consumables 6 in each base. Thus, since it is unnecessary to store consumables 6 at each base for a long period of time, it is also possible to suppress a reduction in the quality of consumables 6. Furthermore, for the manufacturer providing consumables 6, there is no concern that the cash flow will decrease.

In addition to the above-described basic functions, the periodic delivery management apparatus 1 has a function of determining the delivery amount of consumables 6 based on the stock quantity when the stock quantity of each base becomes equal to or less than a predetermined lower limit value and outputting an emergency delivery instruction designating the delivery amount even when the current date is not the periodic delivery reference date. That is, when the use amount of consumables 6 rapidly increases in a busy season or the like, the periodic delivery management apparatus 1 urgently delivers consumables 6 at the time point when the stock quantity reaches the lower limit value. Thus, consumables 6 can be prevented from becoming out-of-stock in a busy period or the like, and the occurrence of downtime of the image forming apparatuses 2a, 2b, and 2c can be suppressed.

A preferred embodiment of the present invention has been described above. However, the present invention is not limited to the content described in the above embodiment, and various modification examples are applicable.

For example, the above-described embodiment illustrates the form in which the periodic delivery management apparatus 1 is installed on the cloud such as the Internet. However, the periodic delivery management apparatus 1 may be installed at each of the bases A and B. In this case, the functions of the above-described periodic delivery management apparatus 1 may be installed in at least one of the image forming apparatuses 2a, 2b, and 2c.

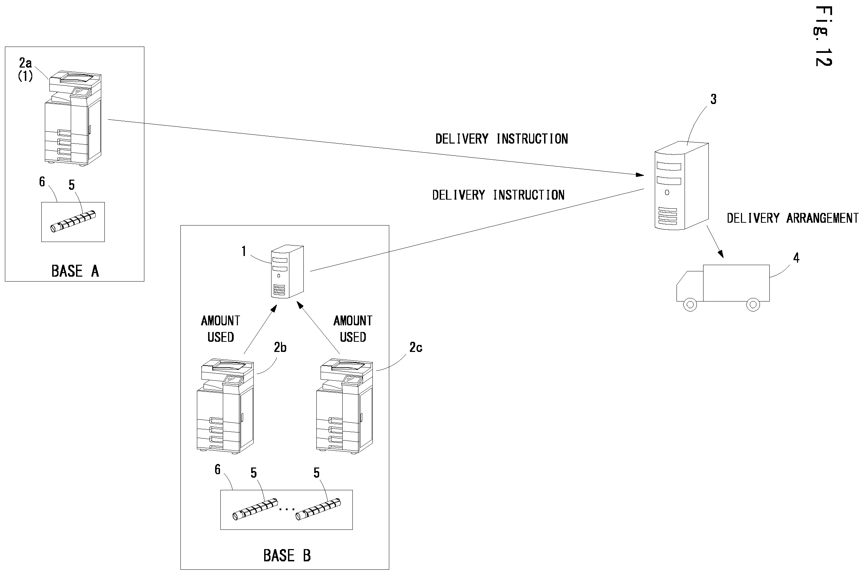

Fig. 12 is an illustration of a modification example of the periodic delivery management apparatus 1. In Fig. 12, the image forming apparatus 2a installed at the base A has the function of the above-described periodic delivery management apparatus 1. Therefore, the image forming apparatus 2a manages the stock quantity of consumables 6 at the base A, and sequentially updates the stock quantity in accordance with the use amount of consumables 6. Next, when the periodic delivery reference date comes, the image forming apparatus 2a transmits a periodic delivery instruction to the delivery arrangement apparatus 3. Furthermore, when it is not the periodic delivery reference date, the image forming apparatus 2a sends an urgent delivery instruction to the delivery arrangement apparatus 3 when the stock number becomes equal to or less than the lower limit value.

Further, in Fig. 12, the above-described periodic delivery management apparatus 1 is installed at the base B. The periodic delivery management apparatus 1 acquires information on the amount of consumables used from the image forming apparatuses 2b and 2c installed at the base B and manages the number of consumables 6 in stock at the base B. Provided that also at the base B, any one of the plurality of image forming apparatuses 2b and 2c may have a function as the above-described periodic delivery management apparatus 1.

Furthermore, in the above-described embodiment, toner bottles 5 is mainly given as an example of consumables 6. However, consumables 6 whose periodic delivery is managed by the periodic delivery management apparatus 1 is not limited to toner bottles 5. That is, consumables 6 whose periodic delivery is managed by the periodic delivery management apparatus 1 include, for example, a waste toner container, a developing device, a charging electrode unit, a photosensitive drum, a transfer belt, an ink tank, and an ink head in addition to toner bottles 5. Furthermore, the consumables 6 may include items other than those listed above.

Furthermore, the case where the program 21 described in the above embodiment is stored in the storage unit 20 in advance has been illustrated. However, the program 21 is not limited to the one stored in advance in the storage unit 20. That is, the program 21 can be a target of transaction by itself. In this case, the program 21 may be provided in a state of being recorded in a computer-readable recording medium such as a CD-ROM. Furthermore, the program 21 may be provided in a downloadable form via a network such as the Internet.

Although embodiments of the present invention have been described and illustrated in detail, the disclosed embodiments are made for purposes of illustration and example only and not limitation. The scope of the present invention should be interpreted by terms of the appended claims.

## Claims

1. A periodic delivery management apparatus (1) for managing periodic delivery of consumables (6) used in an image forming apparatus (2a,2b,2c), the periodic delivery management apparatus (1) comprising:
a determining unit (12) configured to determine whether or not a periodic delivery reference date of consumables (6) for the image forming apparatus (2a, 2b, 2c) has come;
an acquiring unit (13) configured to acquire a used amount of consumables (6) in the image forming apparatus (2a, 2b, 2c); and
a deciding unit (14) configured to determine a delivery amount of consumables (6) by periodic delivery based on the used amount and output a periodic delivery instruction (D2) designating the delivery amount when it is determined that the periodic delivery reference date has come.

2. The periodic delivery management apparatus (1) according to claim 1, wherein
the acquiring unit (13) acquires, as the used amount, replacement information (D1) on consumables (6) transmitted from the image forming apparatuses (2a,2b,2c) in association with replacement of consumables (6) in the image forming apparatuses (2a, 2b, 2c).

3. The periodic delivery management apparatus (1) according to claim 1, wherein
the deciding unit (14) identifies a stock quantity of the consumable (6) based on the used amount, and determines the delivery amount based on the stock quantity.

4. The periodic delivery management apparatus (1) according to claim 3, wherein
the deciding unit (14) holds an upper limit value of the stock quantity and a delivery reference value smaller than the upper limit value, and when the stock quantity is equal to or smaller than the delivery reference value on the periodic delivery reference date, determines the delivery amount based on the stock quantity and outputs the periodic delivery instruction (D2).

5. The periodic delivery management apparatus (1) according to claim 4, wherein
the deciding unit (14) determines the delivery amount such that the stock quantity reaches the upper limit value.

6. The periodic delivery management apparatus (1) according to claim 4, wherein
the deciding unit (14) does not output the periodic delivery instruction (D2) if the stock quantity exceeds the delivery reference value on the periodic delivery reference date.

7. The periodic delivery management apparatus (1) according to claim 4, wherein
when the stock quantity identified based on the used amount becomes equal to or less than a lower limit value that is less than the delivery reference value in a state where it is not determined that it is the periodic delivery reference date, the deciding unit (14) determines the delivery amount based on the stock quantity and outputs an emergency delivery instruction in which the delivery amount is specified.

8. The periodic delivery management apparatus (1) according to claim 7, wherein
the deciding unit (14) determines the delivery amount such that the stock quantity reaches the upper limit value.

9. The periodic delivery management apparatus (1) according to claim 4, wherein
when the stock quantity of one consumable is equal to or smaller than the delivery reference value and the delivery amount relating to the one consumable is determined, and the stock quantity of another consumable is less than the upper limit value, the deciding unit (14) determines the delivery amount relating to the another consumable such that the stock quantity of the another consumable becomes the upper limit value.

10. The periodic delivery management apparatus (1) according to claim 7, wherein
when the stock quantity of one consumable is equal to or smaller than the delivery reference value and the delivery amount relating to the one consumable is determined, and the stock quantity of another consumable is less than the upper limit value, the deciding unit (14) determines the delivery amount relating to the another consumable such that the stock quantity of the another consumable becomes the upper limit value.

11. The periodic delivery management apparatus (1) according to claim 9 or 10, further comprising:
a setting unit (11) that, when the delivery amount relating to the one consumable is determined based on the stock quantity of the one consumable, presets whether to determine the delivery amount relating to the another consumable based on the stock quantity of the another consumable.

12. The periodic delivery management apparatus (1) according to claim 4, further comprising:
a setting unit (11) that outputs a setting screen and sets the periodic delivery reference date, the upper limit value, and the delivery reference value on the basis of an operation on the setting screen.

13. The periodic delivery management apparatus (1) according to claim 1, wherein
the consumables (6) is at least one of a toner bottle, a waste toner container, a developing device, a charging electrode unit, a photosensitive drum, a transfer belt, an ink tank, and an ink head.

14. A periodic delivery management method for managing periodic delivery of consumables (6) used in an image forming apparatus (2a,2b,2c), the method comprising:
a determining step for determining whether or not a periodic delivery reference date of consumables (6) for the image forming apparatus (2a, 2b, 2c) has come;
an acquiring step for acquiring a used amount of the consumable (6) in the image forming apparatus (2a2b,2c); and
a deciding step for determining a delivery amount of consumables (6) by periodic delivery based on the used amount and output a periodic delivery instruction (D2) designating the delivery amount when it is determined that the periodic delivery reference date has come.

15. A computer program (21) to be executed by a computer (1) for managing periodic delivery of consumables (6) to be used in an image forming apparatus (2a,2b,2c), the computer program (21) causing the computer (1) to execute:
a determining step for determining whether or not a periodic delivery reference date of consumables (6) for the image forming apparatus (2a, 2b, 2c) has come;
an acquiring step for acquiring a used amount of the consumable (6) in the image forming apparatus (2a2b,2c); and
a deciding step for determining a delivery amount of consumables (6) by periodic delivery based on the used amount and output a periodic delivery instruction (D2) designating the delivery amount when it is determined that the periodic delivery reference date has come.
